# EUROPEAN PATENT SPECIFICATION

(11) **EP 0 907 044 B1**
(45) Date of publication and mention of the grant of the patent: **23.04.2003**
(21) Application number: 98118598.6
(22) Date of filing: 01.10.1998
(51) Int. Cl.: F16H 61/30

(54) **Control device for a gear change of a vehicle**
Steuervorrichtung für Fahrzeuggetriebeschaltvorrichtung
Dispostif de commande pour changement de vitesses de transmission de véhicule

(30) Priority: 02.10.1997 IT TO970873
(43) Date of publication of application: 07.04.1999
(73) Proprietor: IVECO FIAT S.p.A., 10156 Torino (IT)
(72) Inventor: Giuliani, Adriano, 25123 Brescia (IT)
(74) Representative: Franzolin, Luigi

(56) References cited:
- EP-A- 0 365 033
- DE-A- 3 213 757
- FR-A- 2 007 681
- US-A- 2 137 959
- US-A- 5 189 942

## Description

The present invention relates to a control device for a gear change of a vehicle, in particular a commercial vehicle.

As is known, gear changes of commercial vehicles generally comprise a main unit and a reduction unit coupled to the main unit itself and normally available in two different operational configurations, respectively direct drive (unitary reduction ratio) and reduction (reduction ratio differing from unity).

Genetic control devices for gear changes of the above-mentioned type are known, e.g. by EP 0 365 033 A, and essentially comprise a support member adapted to be rigidly connected to the gearbox and a control member carried by the support member so as to be able to travel along its axis so as to carry out a selection operation in the range of gears, and so as to be able to rotate about the axis itself to carry out a gear engagement/disengagement operation; generally, said gear changes are of the type with eight or nine gears and, therefore, the control member is adapted to occupy along its axis three selection positions corresponding to the reduction configuration of the reduction unit, namely "reduced selection positions", and two selection positions corresponding to the direct drive configuration, namely "direct selection positions".

Moreover, said control devices comprise elastic means for stabilising, in said reduction and direct drive configurations, respectively one of the reduced selection positions and one of the direct selection positions.

In particular, in the event in which the first direct selection position is stabilised in the direction of the higher gears, because of the closeness with which the various selection positions are arranged with respect to one another errors may occur in the operation of the gear change when ascending, for example passing from a gear associated with the final direct selection position to a lower gear associated with the first position of direct selection. In fact, during this operation, the elastic means tend to return the control member into the stable first direct selection position and, therefore, it may happen that the successive movement of the control member, made by the driver of the vehicle to engage the next gear, will put the control member itself in the reduced selection position which is closest in the direction of the lower gears, with the consequent risk of inducing harmful overrevving of the engine.

To obviate this disadvantage, it could be considered to arrange the elastic means in such a way as to cause the final direct selection position to be stable in the direction of the higher gears; however, in this case, when one of-the gears associated with the final reduced selection position is engaged in the direction of the higher gears, it may happen that during the operation of disengaging said gear and selecting and engaging a successive higher gear, i.e. associated with the first direct selection position, the elastic means return the control member in the stable final direct selection position and, therefore, the successive movement of the control member carried out by the driver of the vehicle will result in the engagement of an excessively high gear.

The object of the present invention is to devise a control device for a gear change of a vehicle, which makes it possible to obviate the drawbacks associated with the above-mentioned known control devices.

This object is achieved by a control device for a gear change of a vehicle, in particular a commercial vehicle, as claimed in claim 1.

With a view to a better understanding of the present invention a preferred embodiment will be described non-restrictively by way of example below and with reference to the accompanying drawings, in which:
Figure 1 is an axial section of control device for a gear change of vehicle, in particular a commercial vehicle, designed in accordance with the present invention and arranged in a first operational configuration;
Figure 2 is an axial section of the device in Figure 1, in a second operational configuration;
Figure 3 illustrates a simplified diagram of the engagement and selection positions occupied by a control member of the device in Figures 1 and 2;
Figure 4 is a cross-section of the device in Figure 1;
Figure 5 is a hydraulic diagram of a control unit of the device in Figures 1 and 2, and
Figures 6 to 10 illustrate on an enlarged scale a detail of the device in Figure 1, in different operating positions.

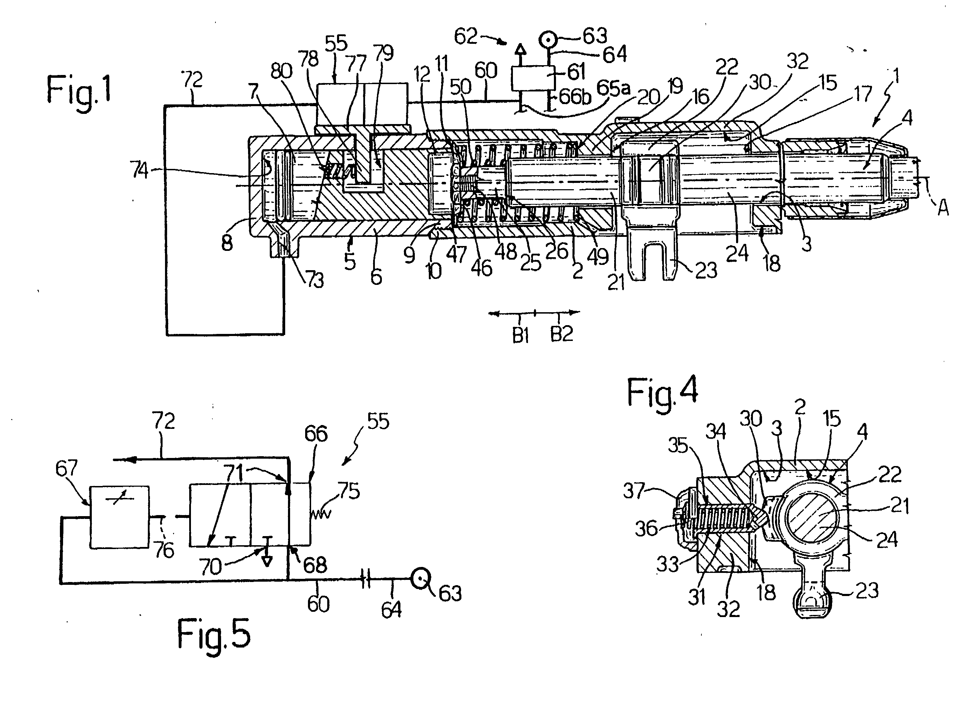

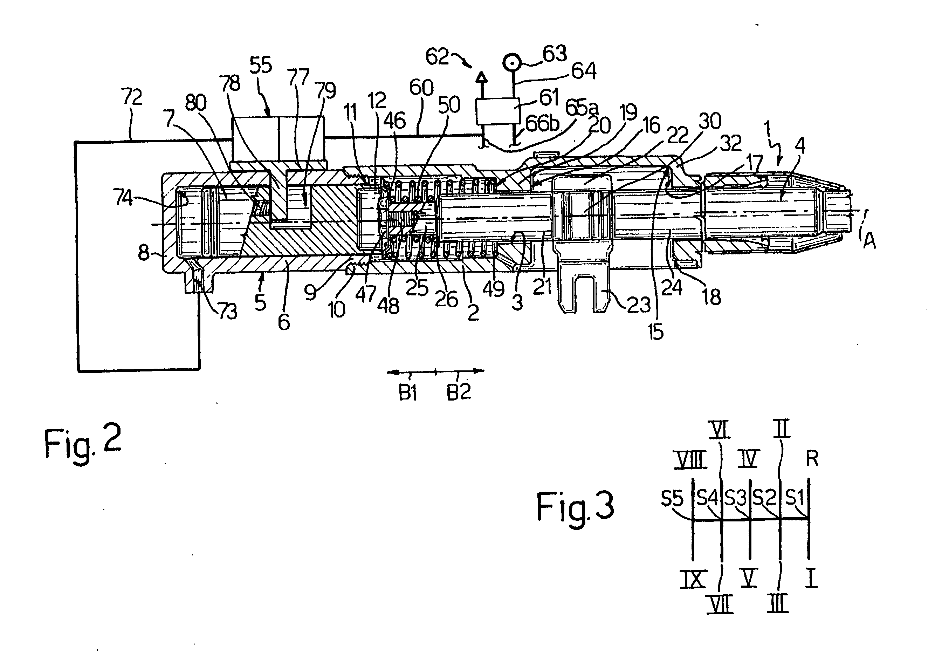

Referring now to Figures 1 and 2, the reference numeral 1 generally denotes a control device for a gear change (known and not shown) of a vehicle (also not shown), in the case of a gear change of a commercial vehicle of the type with nine gears and comprising a main unit and a pneumatically actuated reduction unit (known and not shown) coupled to the main unit itself and available in two different operating configurations, one of which, or direct drive configuration, is defined by a unitary reduction ratio, whereas the other configuration, namely the reduction configuration, is defined by a predetermined reduction ratio differing from unity.

The device 1 comprises a substantially tubular elongate casing 2 adapted to be rigidly connected to the gearbox (not shown) and defining internally a continuous longitudinal cavity 3 having an axis A, a control member 4 engaging coaxially in the cavity 3 and supported by the casing 2 so as to be axially displaceable and angularly rotatable about the axis A itself, and actuated by a lever (known and not shown) for manual selection of the gear ratios.

In particular, the control member 4 can move along the axis A so as to effect a selection operation in the range of gears and it can rotate about the axis A itself to carry out an engagement/disengagement operation of the selected gear; the movements of the control member 4 are transmitted to the gear change via transmissions of a known type (not shown).

In the case illustrated, the control member 4 is adapted to occupy five axial selection positions of respective gear ranges, denoted in Figure 3 by S1,S2,S3,S4, S5 and, for each gear range, is adapted to occupy two angular engagement positions, with which are associated respective consecutive gears of the gear change. More precisely and with reference to Figure 3, the selection position S1 is associated with the reverse gear R and the gear I, the selection position S2 is associated with the gears II and III, the selection position S3 is associated with the gears IV and V, the selection position S4 is associated with the gears VI and VII, and the selection position S5 is associated with the gears VIII and IX.

The gears R, I,II,III, IV and V associated with the selection positions S1,S2,S3 are obtained by arranging said reduction unit in the reduction configuration and are designated "reduced gears", whereas the gears VI, VII,VIII and IX associated with the selection positions S4,S5 are obtained by arranging the reduction unit in the direct drive configuration and are designated "direct drive gears" (or direct gears).

The device 1 further comprises a pneumatic cylinder 5 with an axis A, which comprises a casing 6 securely connected to the casing 2 and a piston 7 mounted to slide fluidtightly in the casing 6 and co-operating with the control member 4. In particular, the casing 6 has a blind end portion 8 and an open opposite end portion 9 which has an external screw thread and is screwed into an internally threaded end portion 10 of the casing 2; the portion 9 of the casing 6 defines with an end edge thereof an axial shoulder 11 turned towards the inside of the cavity 3 of the casing 2.

The piston 7 comprises a cylindrical body with an axis A having a substantially cup-shaped end portion 12 and co-operating with the control member 4 in a manner which will be described in detail below; the piston 7 is normally disposed in an inoperative position, in which an end edge of its portion 12 is disposed axially aligned with the shoulder 11.

With reference to Figures 1,2 and 4, the cavity 3 has an intermediate portion 15 of greater section with respect to the rest of the cavity 3 itself, bounded axially by a pair of walls 16,17 and communicating with the outside through a lateral opening 18 of the casing 2, which is extended in the direction of the axis A.

Of the walls 16 and 17 the wall 16 is part of an annular projection 19 with an axis A protruding radially inside the cavity 3; the projection 19 also has an opposite lateral face turned towards the cylinder 5 and defining a further axial shoulder 20 facing the shoulder 11, the purpose of which will be explained below.

The control member 4 comprises a cylindrical rod 21 with an axis A engaging in the cavity 3 in an axially displaceable and angularly rotatable manner, and an actuating member 22 which is keyed on the rod 21 and which is movable inside the portion 15 of the cavity 3 between the walls 16 and 17 and having a substantially fork-shaped end portion 23 which engages with play in the opening 18, which protrudes outside the casing 2 and is adapted to co-operate with levers of known type (not shown), controlled by said gear-selection lever.

The rod 21 comprises a main portion 24, on which is keyed the actuating member 22, and an end portion 25 adjoining the piston 7 and of smaller diameter than the diameter of the portion 24 and defining with the portion 24 itself an axial shoulder 26 facing the piston 7.

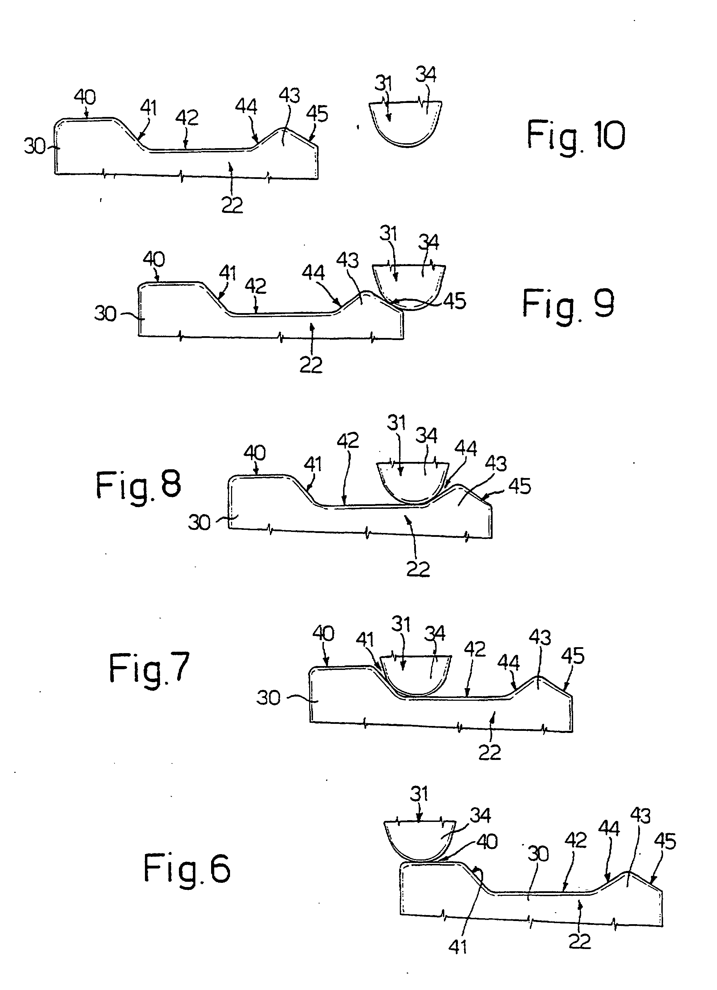

With particular reference to Figure 4, the actuating member 22 has a side wall 30 curved in the form of a cam and with an axis A, which co-operates slidingly during the selection operation of the gears with an elastic cap 31 carried by a side wall 32 of the casing 2 bounding the portion 15 of the cavity 3.

In particular, the cap 31 comprises a hollow cylindrical body 33 tapering towards one end 34 thereof which is substantially of rounded tip shape, it is mounted to slide in a hole 35 in the wall 32 having a radial axis with respect to the axis A, it projects in an intermediate position inside the portion 15 of the cavity 3 and is loaded by a cylindrical helical spring 36 accommodated coaxially inside the body 33 and having one end connected to a protuberance 37 of the wall 32 and an opposite end connected to the body 33 itself.

With particular reference to Figures 6 to 10, the wall 30 has, starting from one axial end of the actuating member 22 facing the wall 26 and extending towards an opposite axial end, a curved surface 40 of constant radius disposed in contact with the cap 31 in the selection position S1 of the control member 4, a curved surface 41 with decreasing radius co-operating with the cap 31 in the selection position S2 of the control member 4, a curved surface 42 of constant radius and a pointed projection 43 defined by two curved surfaces 44,45 respectively of increasing and decreasing radius. The surfaces 44,45 are arranged in contact with the cap 31 respectively in the selection positions S3 and S4; finally, in the selection position S5 the actuating member 22 is spaced apart from the cap 31 and the control member 4 is disposed abutting against the shoulder 11 (Figure 1), as will be explained in detail below.

Therefore, during the gear-selection operation and thus during the displacement of the actuating member 22 along the axis A in both directions, the cap 31 constitutes a releasable stop member for the projection 43 and defines a single switching point for the reduction unit between the reduction and direct drive configurations.

With reference to Figures 1 and 2, the control member 4 further comprises a movable element 46 of substantially annular shape with an axis A and mounted to slide on the portion 25 of the rod 21 between the shoulder 26 and a head 47 of a screw 48 mounted in a blind threaded hole with an axis A provided in the portion 25 itself; more precisely, the head 47 of the screw 48 is of larger diameter than the diameter of the portion 25 and, therefore, prevents the removal of the movable element 46 towards the cylinder 5.

The device 1 further comprises a first cylindrical helical spring 49 accommodated coaxially inside the cavity 3 and interposed between the shoulder 20 of the casing 2 and the movable element 46, and a second cylindrical helical spring 50 with an axis A wound around the portion 25 of the rod 21 and interposed between the shoulder 26 and the movable element 46.

The spring 49 is adapted to exert a force B1 on the movable element 46 of the control member 4 along the axis A directed towards the cylinder 5 and tending to bring the movable element 46 into abutment against the shoulder 11 and, therefore, the control member 4 in the selection position S5 (Figure 1); instead, the spring 50 is adapted to exert a force B2 on the movable element 46 opposing the force B1 exerted by the spring 49 and tending to bring the surface 45 of the projection 43 of the control member 4 into abutment with the cap 31 (Figure 9).

In the reduction configuration of the reduction unit, the projection 43 of the actuating member 22 is positioned between the cap 31 and the wall 17 (Figures 6 to 8) and, therefore, the force B1 of the spring 49 tends to bring the movable element 46 and, therefore, the control member 4 towards the shoulder 11, maintains in a stable manner, in the absence of external actions on the gear-selection lever, the surface 44 of the projection 43 in abutment with the cap 31 and, therefore, maintains in a stable manner the control member 4 in the selection position S3.

In the direct-drive configuration of the reduction unit and with the piston 7 disposed in its inoperative position, the force B2 of the spring 50 is counteracted in that the projection 43 of the actuating member 22 is spaced apart from the cap 31 (Figure 10) and the control member 4 is subjected only to the force B1 of the spring 49 which brings the movable element 46 into abutment with the shoulder 11 and against the portion 12 of the piston 7.

According to an important feature of the present invention, the piston 7 can move from the inoperative position into an operative position (Figure 2), in which its portion 12 projects axially inside the cavity 3 with respect to the shoulder 11 so as to bring the surface 45 of the projection 43 into abutment with the cap 31 under the force B2 of the spring 50, thereby counteracting the force B1 of the spring 49, and to position in a stable manner the control member 4 in the selection position S4.

The device 1 further comprises a timed pneumatic control unit 55 adapted to control the displacement of the piston 7 from the inoperative position into the operative position at the moment at which the reduction unit is switched from the reduction configuration to the direct-drive configuration, and to maintain the piston 7 itself into the operative position for predetermined period of time T, in this case equal to several seconds.

With reference to Figures 1,2 and 5, the unit 55 and with it the cylinder 5 are supplied through a duct 60 and with the interposition of a distributor valve 61 by a pneumatic system 62 for actuating the reduction unit.

In particular, the valve 61, known per se and only illustrated schematically in Figures 1 and 2, has an inlet connected via a duct 65 to a compressed-air supply 63 for the system 62, a first consumer branch 65a connected to a control actuator (not shown) to bring the reduction unit into the direct-drive configuration and to the cylinder 7 via the duct 60, a second consumer branch 66b connected to a control actuator (not shown) to bring the reduction unit into the reduction configuration, and an outlet connected to the discharge. The valve 61 is movable between a first operative position, in which it connects the supply 63 with the consumer branch 66b and the consumer branch 65a with the discharge, and a second operative position, in which it connects the supply 63 with the consumer branch 65a (and therefore in shunt with the duct 60) and the consumer branch 66b with the discharge.

The unit 55 comprises a control valve 66 for the cylinder 5 interposed between the cylinder 5 itself and the compressed-air supply 63, which is normally open to move the piston 7 from the inoperative position into the operative position as soon as compressed air is fed into the duct 60, and a timed pneumatic control valve 67 controlling the valve 66, for displacing and maintaining the valve 66 itself in the closed position after the period of time T.

In particular, the valve 66 is of three-way type with two positions and has an inlet 68 connected to the supply 63 via the ducts 60 and 65, a first outlet 71 connected via a consumer duct 72 with an orifice 73 provided in the casing 6 of the cylinder 5, and a second outlet 70 connected to the discharge; in particular the orifice 73 communicates the duct 72 with a chamber 74 provided in the casing 6 of the cylinder 5 and defined by the blind end portion 8 of the casing 6 itself and by the piston 7.

The valve 66 is normally held open by a spring 75 set at an equivalent predetermined pressure value and is induced to close by its inlet pressure via a control duct 76 connected with the duct 60 via the valve 67.

The valve 67, of known type, is disposed in series with the duct 76, is normally arranged in a position closing the connection between the duct 76 itself and the valve 66 and it is induced to open after the period of time T by the delivery pressure of the supply 63.

Finally, as is evident from Figures 1 and 2, the valves 66,67 are supported by a cover 77 mounted externally on the side wall of the casing 6, which is of substantially T-shaped cross-section and which has a portion 78 projecting inside the casing 6 itself and engages with ply in a slot 79 in the piston 7; the portion 78 of the cover 77 is connected to the piston 7 by a spring 80 adapted to facilitate rapid displacement of the piston 7 from the operative position into the inoperative position when the air is discharged from the chamber 74 of the cylinder 5.

The mode of operation of the device 1 will be described starting from an initial condition in which the gear V is engaged and the valve 61 is disposed in the first operative position and, therefore, maintains the reduction unit in the reduction configuration. To pass from the gear V to a successive higher gear, for example to gear VI or VII, it is necessary to turn the control member 4 about the axis A until reaching the selection position S3, which is a stable position and is defined by the surface 44 of the projection 43 coming into abutment with the cap 31 under the force B1 of the spring 49 (Figure 8).

By moving the control member 4 axially towards the cylinder 5, the projection 43 passes over the cap 31 and the selection position S4 is reached. At the same time as this movement, the valve 61 is switched into the second operative position and the reduction unit is disposed in the direct-drive configuration.

The air delivered from the supply 63 is thus fed to the duct 60 and the valve 66, which is in the open position, allows air to flow into the chamber 74 of the cylinder 5 causing displacement of the piston 7 from the inoperative position into the operative position, in which it forms an abutment for the movable element 46 and renders the selection position S4 stable. At this point it is only necessary to turn the control member 4 about the axis A to engage the gear VI and, successively, the gear VII associated with the selection position S4.

When the period of time T has passed, which is chosen so as to make it possible to pass easily from the gear V to the gears VI and VII, the valve 67 opens the connection between the duct 76 and the valve 66 and, therefore, the valve 66 itself is brought into the closed position, thus opening the orifice 70 so as to connect the chamber 74 with the discharge. The piston 7 returns into the inoperative position and the selection position S5 is thus stabilised so as to facilitate the successive passage into one or both of the gears VIII, IX associated therewith.

Finally, to pass from one of the gears VIII or IX associated with the selection position S5 to one of the gears VI or VII associated with the selection position S4, the actuating member 22 is displaced towards the wall 17; the travel of the actuating member 22 induces the portion 25 of the rod 21 to move away from the piston 7 and, because of the head 47 of the screw 48 and the spring 50, it entrains the movable element 46 with it, which compresses the spring 49; since in this phase the stable selection position is still the position S5 there is not the danger of engaging a gear associated with the selection position S3 and thereby inducing harmful overrevving of the engine, as could occur in known gear-change control devices.

The advantages which can be achieved with the present invention are evident from a study of the features of the device 1.

The switching into the second operating position of the distributor valve 61 (which brings the reduction unit into the direct-drive configuration) initiates each time an operating cycle of the valves 66 and 67 which terminates with a stabilised selection position (S5) for all the time that the reduction unit remains in the direct-drive configuration.

In particular, the co-operation of the cylinder 5 with the springs 49,50 makes it possible to bring out a first stable selection position (S4) of the control member 4 in the phase of upward gear changes from the reduction configuration into the direct-drive configuration of the reduction unit, so as to obviate the engagement of gears which are too high and, after a period of time T, makes it possible to stabilise a second selection position (S5) of the control member 4 so as to avoid, in the phase of downward gear changes from the selection position S5 towards the selection position S4, jumping this latter selection position and engaging gears which are too low, thereby inducing harmful overrevving of the vehicle's engine.

Furthermore, the cylinder 5 does not require a dedicated pneumatic system because as it has to operate in phase with respect to the reduction unit it can be connected to the distributor valve 61, in the consumer branch 65a of the latter connected to the control actuator so as to bring the reduction unit into the direct-drive configuration.

## Claims

1. A control device (1) for a gear change of a vehicle, in particular a commercial vehicle, comprising:
- fixed support means (2);
- a control member (4) carried by said support means (2) so as to be able to travel along an axis (A) to carry out a selection operation in the range of gears, and so as to be able to rotate about said axis (A) to carry out a gear engagement/disengagement operation, said control member (4) being adapted to occupy along said axis (A) at least two selection positions (S4,S5) in the range of gears, **characterised by** comprising first elastic means (49) interposed between said support means (2) and said control member (4) and adapted to exert along said axis (A) a first force (B1) on the control member (4) itself so as to bring it into abutment with first stop means (11) defining a first (S5) of said selection positions (S4,S5), and second elastic means (50) adapted to exert on said control member (4) a second force (B2) opposed to said first force (B1) so as to move the control member (4) itself towards second stop means (31) defining a second one (S4) of said selection positions (S4,S5), actuator means (5) co-operating with said first and second elastic means (49,50) for selectively counteracting said first and second forces (B1,B2) and arranging in a stable manner said control member (4) respectively in said second selection position (S4) and in said first selection position (S5), and timed control means (55) for controlling said actuator means (5).

2. A device according to claim 1, **characterised in that** said actuator means (5) comprise an output member (7) interacting with said control member (4) and able to move between two positions, respectively inoperative and operative, corresponding respectively to said first and second selection positions (S5,S4) of said control member (4) so as to counteract respectively said second force (B2) of said second elastic means (50) and said first force (B1) of said first elastic means (49), said timed control means (55) comprising control means (66) which can be actuated selectively at a predetermined moment of said selection operation so as to bring said output member (7) of said actuator means (5) into said operative position and timer means (67) co-operating with said control means (66) to move said output member (7) into said inoperative position after a predetermined period of time (T).

3. A device according to claim 2, for a gear change of a vehicle, comprising a main unit and a reduction unit coupled to the main unit itself and normally available in two different operational configurations, respectively direct drive and reduction, **characterised in that** said control member (4) is adapted to occupy, in said direct-drive configuration of said reduction unit, said first and second selection positions (S5,S4) and, in said reduction configuration of the reduction unit itself, a plurality of third selection positions (S3,S2,S1) disposed successively on the opposite side of said second selection position (S4) with respect to said first selection position (S5), said control means (66) being actuated when said reduction unit is switched from said reduction configuration into said direct drive configuration.

4. A device according to claim 2 or 3, **characterised in that** said support means comprise a casing (2) defining a cavity (3) coaxial with said axis (A), and **in that** said control member (4) comprises a rod (21) engaging coaxially in said cavity (3) and supported by said casing (2) in an axially displaceable and angularly rotatable manner, and a movable element (46) mounted to slide on said rod (21) between two abutment elements (26,47) provided on said rod (21) itself and loaded on one side by said output member (7) of said actuator means (5) and on the opposite side by said first and second elastic means (49,50), said first elastic means (49) being interposed between said movable element (46) and a first shoulder (20) of said casing (2) and said second elastic means (50) being interposed between the movable element (46) itself and a first one (26) of said abutment means (26,47) disposed on the opposite side of said actuator means (5).

5. A device according to claim 4, **characterised in that** said actuator means comprise a fluid-operated cylinder (5) provided with an outer casing (6) which is blind at one end (8) and open in alignment with the opposite end (9) and which is securely connected at one end (10) of said casing (2) and in which said output member (7) engages sliding fluidtightly therein, said casing (6) being mounted partly inside said casing (2) and defining with an annular end edge thereof facing said first shoulder (20) of the casing (2) itself a second shoulder (11) forming said first stop means.

6. A device according to claim 4 or 5, **characterised in that** said second stop means are releasable stop means and comprise an elastic cap (31) carried by said casing (2) and arranged spaced apart from said first stop means (11) along said axis (A) and extending radially with respect to said axis (A) itself, said control member (4) comprising a pointed projection (43) adapted to abut against said cap (31) in said second selection position (S4) and in an associated one (S3) of said third selection positions (S1,S2,S3), said cap (31) defining, during said selection operation in the range of gears, a single switching point of said reduction unit between said reduction and direct-drive configurations.

7. A device according to claim 6, **characterised in that** said output member (7) of said actuator means (5) defines, in its inoperative position and together with said first stop means (11), an abutment for said movable element (46) loaded by said first elastic means (49) so as to maintain said pointed projection (43) spaced apart from said cap (31) and to counteract said second force (B2) of said second elastic means (50), said output member (7) being arranged, in said operative position, partly projecting inside said cavity (3) so as to bring said pointed projection (43) into abutment with said cap (31) under the force (B2) of said second elastic means (50) and to counteract said first force (B1).

8. A device according to any one of claims 4 to 7, **characterised in that** said output member (7) of said actuator means (5) has a cup-shaped end portion (12) co-operating with said movable element (46).

9. A device according to any one of the preceding claims, **characterised in that** said first and second elastic means comprise respective cylindrical helical springs (49,50) coaxial with said axis (A).

10. A device according to any one of claims 5 to 9, **characterised in that** said cylinder (5) is a pneumatically actuated cylinder and **in that** said control means comprise first valve means (66) which are interposed between a compressed-air supply (63) and said cylinder (5) and which can move between a closed position, in which they connect said cylinder (5) to the discharge, and an open position, in which they connect said supply (63) to said cylinder (5), and which are normally disposed in said open position, said timer means comprising second timed valve means (67) controlling said first valve means (66).

11. A device according to claim 10, **characterised in that** said reduction unit is a pneumatically actuated reduction unit and comprises third valve means (61) which can move between a first position, in which they connect said compressed-air supply (63) to said reduction unit in the reduction configuration and induce said cylinder (5) to discharge, and a second position, in which they connect said compressed-air supply (63) to said reduction unit in the direct-drive configuration and to said cylinder (5).

## Patentansprüche

1. Steuervorrichtung (1) für Fahrzeuggetriebeschaltvorrichtung, insbesondere für Nutzfahrzeuge, umfassend:
- eine feste Stützeinrichtung (2);
- ein Steuerelement (4), das durch die Stützeinrichtung (2) getragen wird, so dass es sich entlang einer Achse (A) bewegen kann, um eine Auswahl der Gänge vorzunehmen, und so, dass es sich um die Achse (A) drehen kann, um das Einlegen/Lösen eines Gangs auszuführen, wobei das Steuerelement (4) entlang der Achse (A) mindestens zwei Auswahlpositionen (S4, S5) für Gänge einnehmen kann,
**dadurch gekennzeichnet, dass** sie umfasst
eine erste elastische Einrichtung, die zwischen der Stützeinrichtung (2) und dem Steuerelement (4) liegt und entlang der Achse (A) eine erste Kraft (B1) auf das Steuerelement (4) selbst ausüben kann, so dass es in Berührung mit einer ersten Anschlageinrichtung (11) gebracht werden kann, die eine erste (S5) der Auswahlpositionen (S4, S5) definiert; und
eine zweite elastische Einrichtung (50), die auf das Steuerelement (4) eine zweite Kraft (B2) ausüben kann, die entgegengesetzt zu der ersten Kraft (B1) ist, um das Steuerelement (4) selbst in Richtung auf eine zweite Anschlageinrichtung (31) zu bewegen, die eine zweite (S4) der Auswahlpositionen (S4, S5) definiert;
eine Betätigungseinrichtung (5), die mit der ersten und . zweiten elastischen Einrichtung (49, 50) zusammenwirkt, um selektiv der ersten und zweiten Kraft (B1, B2) entgegenzuwirken und auf eine stabile Weise das Steuerelement (4) jeweils in der zweiten Auswahlposition (S4) und der ersten Auswahlposition (S5) anzuordnen; und
eine zeitlich festgelegte Steuereinrichtung (55) zum Steuern der Betätigungseinrichtung (5).

2. Vorrichtung nach Anspruch 1, **dadurch gekennzeichnet, dass** die Betätigungseinrichtung (5) ein Ausgabeelement (7) umfasst, das mit dem Steuerelement (4) zusammenwirkt und sich zwischen zwei Positionen bewegen kann, die inoperativ bzw. operativ sind, entsprechend jeweils der ersten und zweiten Auswahlposition (S5, S4) des Steuerelements (4), so dass jeweils der zweiten Kraft (B2) der zweiten elastischen Einrichtung (50) und der ersten Kraft (B1) der ersten elastischen Einrichtung (49) entgegengewirkt wird, wobei die zeitlich festgelegte Steuereinrichtung (55) eine
Steuereinrichtung (66) umfasst, die selektiv in einem im voraus bestimmten Moment der Auswahl betätigt werden kann, so dass das Ausgabeelement (7) der Betätigungseinrichtung (5) in die operative Position gebracht wird, und eine Taktgebungseinrichtung (67), die mit der Steuereinrichtung (66) zusammenwirkt, um das Ausgabeelement (7) in die inoperative Position nach Ablauf einer vorbestimmten Zeitdauer (T) zu bringen.

3. Vorrichtung nach Anspruch 2, für die Getriebeschaltung eines Fahrzeugs, umfassend eine Haupteinheit und eine Abschwächungseinheit, die mit der Haupteinheit selbst verbunden ist und gewöhnlich in zwei unterschiedlichen Betriebskonfigurationen verfügbar ist, jeweils dem direkten Antrieb und der Abschwächung, **dadurch gekennzeichnet, dass** das Steuerelement (4) in der direkten Antriebskonfiguration der Abschwächungseinheit die erste und zweite Auswahlposition (S5, S4) und in der Abschwächungskonfiguration der Abschwächungseinheit selbst mehrere dritte Auswahlpositionen (S3, S2, S1) einnehmen kann, die nacheinander folgend auf der gegenüberliegenden Seite der zweiten Auswahlposition (S4) in bezug auf die erste Auswahlposition (S5) angebracht sind, wobei die Steuereinrichtung (66) betätigt wird, wenn die Abschwächungseinheit aus der Abschwächungskonfiguration in die Direktantriebs-Konfiguration geschaltet wird.

4. Vorrichtung nach Anspruch 2 oder 3, **dadurch gekennzeichnet, dass** die Stützeinrichtung ein Gehäuse (2) umfasst, das eine Vertiefung (3) definiert, die koaxial zu der Achse (A) ist, und dass das Steuerelement (4) einen Stab (21) umfasst, der koaxial in der Vertiefung (3) im Eingriff ist und durch das Gehäuse 82) auf eine axial verschiebbare und im Winkel drehbare Weise gestützt wird, und ein bewegbares Element (46), das zum Gleiten auf der Stange (21) zwischen zwei Anschlagelementen (26, 47) montiert ist, die auf der Stange (21) selbst vorgesehen sind, und das auf einer Seite durch das Ausgabeelement (7) der Betätigungseinrichtung (5) und auf der gegenüberliegenden Seite durch die erste und zweite elastische Einrichtung (49, 50) beaufschlagt wird, wobei die erste elastische Einrichtung (49) zwischen dem bewegbaren Element (46) und einer ersten Schulter (20) des Gehäuses (2) liegt und die zweite elastische Einrichtung (50) zwischen dem bewegbaren Element (46) selbst und einer ersten (26) der Anschlageinrichtungen (26, 47) liegt, die auf der gegenüberliegenden Seite der Betätigungseinrichtung (5) vorgesehen sind.

5. Vorrichtung nach Anspruch 4, **dadurch gekennzeichnet, dass** die Betätigungseinrichtung einen durch Fluid betätigten Zylinder (5) umfasst, der mit einem äußeren Gehäuse (6) versehen ist, das an einem Ende (8) geschlossen ist und in Ausrichtung mit dem gegenüberliegenden Ende (9) offen ist, und der fest mit einem Ende (10) des Gehäuses (2) verbunden ist, und worin das Ausgabeelement (7) verschiebbar und fluiddicht in Eingriff ist, wobei das Gehäuse (6) teilweise im Inneren des Gehäuses (2) montiert ist und mit einem ringförmigen Endrand, der in Richtung auf die erste Schulter (20) des Gehäuses (2) selbst gerichtet ist, eine zweite Schulter (11) definiert, die die erste Anschlageinrichtung bildet.

6. Vorrichtung nach Anspruch 4 oder 5, **dadurch gekennzeichnet, dass** die zweite Anschlageinrichtung eine lösbare Anschlageinrichtung ist und eine elastische Kappe (31) umfasst, die durch das Gehäuse (2) getragen wird und beabstandet von der ersten Anschlageinrichtung (11) entlang der Achse (A) angeordnet ist und sich radial in bezug auf die Achse (A) selbst erstreckt, wobei das Steuerelement (4) einen spitzen Vorsprung (43) umfasst, der gegen die Kappe (31) in der zweiten Auswahlposition (S4) und in einer zugehörigen (S3) der dritten Auswahlpositionen (S1, S2, S3) stoßen kann, wobei die Kappe (31) während der Auswahl der Gänge einen einzigen Schaltpunkt der Abschwächungseinheit zwischen der Abschwächungs- und Direktantriebskonfiguration definiert.

7. Vorrichtung nach Anspruch 6, **dadurch gekennzeichnet, dass** das Ausgabeelement (7) der Betätigungseinrichtung (5) in seiner inoperativen Position und zusammen mit der ersten Anschlageinrichtung (11) einen Anschlag für das bewegbare Element (46) definiert, das durch die erste elastische Einrichtung (49) beaufschlagt ist, so dass der zugespitzte Vorsprung (43) beabstandet von der Kappe (31) gehalten wird und um der zweiten Kraft (B2) der zweiten elastischen Einrichtung (50) entgegenzuwirken, wobei das Ausgabeelement (7) in der inoperativen Position so angeordnet ist, dass es teilweise in das Innere der Vertiefung (3) vorsteht, so dass der spitze Vorsprung (43) in Anschlag mit der Kappe (31) unter der Kraft (B2) der zweiten elastischen Einrichtung (50) gebracht wird und um der ersten Kraft (B1) entgegenzuwirken.

8. Vorrichtung nach einem der Ansprüche 4 bis 7, **dadurch gekennzeichnet, dass** das Ausgabeelement (7) der Betätigungseinrichtung (5) einen becherförmigen Endbereich (12) aufweist, der mit dem bewegbaren Element (46) zusammenwirkt.

9. Vorrichtung nach einem der vorhergehenden Ansprüche, **dadurch gekennzeichnet, dass** die erste und zweite elastische Einrichtung jeweils eine zylindrische helixförmige Feder (49, 50) umfasst, die koaxial zu der Achse (A) ist.

10. Vorrichtung nach einem der Ansprüche 5 bis 9, **dadurch gekennzeichnet, dass** der Zylinder (5) ein pneumatisch betätigter Zylinder ist, und dass die Steuereinrichtung eine erste Ventileinrichtung (66) umfasst, die zwischen eine Druckluftzufuhr (63) und den Zylinder (5) geschaltet ist und die sich zwischen einer geschlossenen Position, in der sie den Zylinder (5) mit dem Ablass verbindet, und einer offenen Position, in der sie die Zufuhr (63) mit dem Zylinder (5) verbindet, bewegbar ist, und die normal in der offenen Position angebracht ist, wobei die Taktgebungseinrichtung eine zweite zeitlich gesteuerte Ventileinrichtung (67) umfasst, die die erste Ventileinrichtung (66) steuert.

11. Vorrichtung nach Anspruch 10, **dadurch gekennzeichnet, dass** die Abschwächungseinheit eine pneumatisch betätigte Abschwächungseinheit ist und eine dritte Ventileinrichtung (61) umfasst, die sich zwischen einer ersten Position, an der sie die Druckluftzufuhr (63) mit der Abschwächungseinheit in der Abschwächungskonfiguration verbindet und den Zylinder (5) zum Ablass veranlasst, und einer zweiten Position, in der sie die Druckluftzufuhr (63) mit der Abschwächungseinheit in der Direktantriebs-Konfiguration und mit dem Zylinder (5) verbindet, bewegbar ist.

## Revendications

1. Dispositif de commande (1) de changement de vitesses d'un véhicule, en particulier d'un véhicule utilitaire, comprenant :
- des moyens de support fixes (2) ;
- un élément de commande (4) supporté par lesdits moyens de support (2) de manière à pouvoir se déplacer le long d'un axe (A) pour réaliser une opération de sélection dans la gamme des vitesses, et de manière à pouvoir tourner autour dudit axe (A) pour réaliser une opération d'engagement/désengagement de vitesse, ledit élément de commande (4) étant adapté pour occuper le long dudit axe (A) au moins deux positions de sélection (S4, S5) dans la gamme des vitesses, **caractérisé en ce qu'**il comprend
- des premiers moyens élastiques (49) interposés entre lesdits moyens de support (2) et ledit élément de commande (4) et adaptés pour exercer le long dudit axe (A) une première force (B1) sur l'élément de commande (4) lui-même de manière à l'amener en butée avec des premiers moyens de butée (11) définissant une première position (S5) parmi lesdites positions de sélection (S4, S5), et
- des deuxièmes moyens élastiques (50) adaptés pour exercer sur ledit élément de commande (4) une deuxième force (B2) opposée à ladite première force (B1) de manière à déplacer l'élément de commande (4) lui-même en direction desdits deuxièmes moyens de butée (31) définissant une deuxième position (S4) parmi lesdites positions de sélection (S4, S5), des moyens d'actionnement (5) coopérant avec lesdits premiers et deuxièmes moyens élastiques (49, 50) pour s'opposer sélectivement auxdites première et deuxième forces (B1, B2) et disposant de manière stable ledit élément de commande (4) respectivement dans ladite deuxième position de sélection (S4) et dans ladite première position de sélection (S5), et des moyens de commande synchronisés (55) pour commander lesdits moyens d'actionnement (5).

2. Dispositif selon la revendication 1, **caractérisé en ce que** lesdits moyens d'actionnement (5) comprennent un élément de sortie (7) interagissant avec ledit élément de commande (4) et apte à se déplacer entre deux positions, respectivement inopérante et opérante, correspondant respectivement auxdites première et deuxième position de sélection (S4, S5) dudit élément de commande (4) de manière à s'opposer respectivement à ladite deuxième force (B2) desdits deuxièmes moyens élastiques (50) et à ladite première force (B1) desdits premiers moyens élastiques (49), lesdits moyens de commande synchronisés (55) comprenant des moyens de commande (66) qui peuvent être actionnés sélectivement à un instant prédéterminé de ladite opération de sélection de manière à amener ledit élément de sortie (7) desdits moyens d'actionnement (5) dans ladite position opérante et des moyens de synchronisation (67) coopérant avec lesdits moyens de commande (66) pour déplacer ledit élément de sortie (7) et l'amener dans ladite position inopérante au bout d'un intervalle de temps prédéterminé (T).

3. Dispositif selon la revendication 2, pour réaliser un changement de vitesses d'un véhicule, comprenant une unité principale et un unité de réduction couplée à l'unité principale elle-même et disponible normalement en deux configurations opérationnelles différentes, respectivement d'entraînement direct et de réduction, **caractérisé en ce que** ledit élément de commande (4) est adapté pour occuper, dans ladite configuration d'entraînement direct de ladite unité de réduction, lesdites première et deuxième positions de sélection (S5, S4) et, dans ladite configuration de réduction de l'unité de réduction elle-même, une pluralité de troisièmes positions de sélection (S3, S2, S1) disposées successivement du côté opposé de ladite deuxième position de sélection (S4) par rapport à ladite première position de sélection (S5), lesdits moyens de commande (66) étant actionnés lorsque ladite unité de réduction et est commutée de ladite configuration de réduction dans ladite configuration d'entraînement direct.

4. Dispositif selon la revendication 2 ou 3, **caractérisé en ce que** lesdits moyens de support comprennent un boîtier (2) définissant une cavité (3) coaxiale avec ledit axe (A), et **en ce que** ledit élément de commande (4) comprend une tige (21) s'engageant coaxialement dans ladite cavité (3) et supportée par ledit boîtier (2) de manière à pouvoir se déplacer axialement et tourner angulairement, et un élément mobile (46) monté de façon à coulisser sur ladite tige (21) entre deux éléments de butée (26, 47) prévus sur ladite tige (21) elle-même et contraints d'un côté par ledit élément de sortie (7) desdits moyens d'actionnement (5) et du côté opposé par lesdits premiers et deuxièmes moyens élastiques (49, 50), lesdits premiers moyens élastiques (49) étant interposés entre ledit élément mobile (46) et un premier épaulement (20) dudit boîtier (2) et lesdits deuxièmes moyens élastiques (50) étant interposés entre l'élément mobile (46) lui-même et un premier moyen de butée (26) parmi lesdits moyens de butée (26, 47) disposé du côté opposé auxdits moyens actionneurs (5).

5. Dispositif selon la revendication 4, **caractérisé en ce que** lesdits moyens d'actionnement comprennent un cylindre à commande fluidique (5) doté d'un boîtier extérieur (6) qui est fermé à une extrémité (8) et ouvert en alignement avec l'extrémité opposée (9) et qui est relié fixant à une extrémité (10) dudit boîtier (2) et dans lequel ledit élément de sortie (7) s'engage à coulissement à l'intérieur de façon étanche, ledit boîtier (6) étant monté partiellement à l'intérieur dudit boîtier (2) et délimitant avec un bord d'extrémité annulaire de celui-ci dirigé vers ledit épaulement (20) du boîtier (2) lui-même, un deuxième épaulement (11) formant lesdits premiers moyens de butée.

6. Dispositifs selon la revendication 4 ou 5, **caractérisé en ce que** lesdits deuxièmes moyens de butée sont des moyens de butée libérables et comprennent un capuchon élastique (31) supporté par ledit boîtier (2) et agencé à distance desdits premiers moyens de butée (11) le long dudit axe (A) et s'étendant radialement par rapport audit axe (A) lui-même, ledit élément de commande (4) comprenant une saillie pointue (43) adaptée pour venir en butée contre ledit capuchon (31) dans ladite deuxième position de sélection (S4) et dans une position associée (S3) parmi lesdites troisièmes positions de sélection (S1, S2, S3), ledit capuchon (31) définissant, pendant ladite opération de sélection dans la gamme de vitesses, un point de commutation unique de ladite unité de réduction entre lesdites configurations de réduction et d'entraînement direct.

7. Dispositif selon la revendication 6, **caractérisé en ce que** ledit élément de sortie (7) desdits moyens d'actionnement (5) définit, dans sa position inopérante et conjointement avec lesdits premiers moyens de butée (11), une butée pour ledit élément mobile (46) contraint par lesdits premiers moyens élastiques (49) de manière à maintenir ladite saillie pointue (43) à distance dudit capuchon (31) et à s'opposer à ladite deuxième force (B2) exercée par lesdits deuxièmes moyens élastiques (50), ledit élément de sortie (7) étant disposé, dans ladite position opérante, de façon à s'étendre partiellement à l'intérieur de ladite cavité (3) de manière à amener ladite saillie pointue (43) en butée avec ledit capuchon (31) sous l'action de la force (B2) exercée par lesdits deuxièmes moyens élastiques (50) et à s'opposer à ladite première force (B1).

8. Dispositif selon l'une quelconque des revendications 4 à 7, **caractérisé en ce que** ledit élément de sortie (7) desdits moyens d'actionnement (5) comporte une portion d'extrémité (12) en forme de coupelle coopérant avec ledit élément mobile (46).

9. Dispositif selon l'une quelconque des revendications précédentes, **caractérisé en ce que** lesdits premiers et deuxièmes moyens élastiques comprennent des ressorts cylindriques hélicoïdaux respectifs (49, 50) coaxialement audit axe (A).

10. Dispositif selon l'une quelconque des revendications 5 à 9, **caractérisé en ce que** ledit cylindre (5) est un cylindre actionné par des moyens pneumatiques et **en ce que** lesdits moyens de commande comprennent des premiers moyens de clapet (66) qui sont interposés entre une alimentation en air comprimé (63) et ledit cylindre (5) et qui peuvent se déplacer entre une position fermée, dans laquelle ils relient ledit cylindre (5) à la sortie d'évacuation, et une position ouverte, dans laquelle ils relient ladite alimentation (63) audit cylindre (5), et qui sont normalement disposés dans ladite position ouverte, lesdits moyens de synchronisation comprenant des deuxièmes moyens de clapet synchronisés (67) commandant lesdits premiers moyens de clapet (66).

11. Dispositif selon la revendication 10, **caractérisé en ce que** ladite unité de réduction est une unité de réduction commandée par des moyens pneumatiques et comprend des troisièmes moyens de clapet (61) qui peuvent se déplacer entre une première position, dans laquelle ils relient ladite alimentation en air comprimé (63) à ladite unité de réduction dans la configuration de réduction et commande l'évacuation dudit cylindre (5), et une deuxième position, dans laquelle ils relient ladite alimentation en air comprimé (63) à ladite unité de réduction dans la configuration d'entraînement direct et audit cylindre (5).
